# FASCICULE DE BREVET EUROPEEN

(11) **EP 3 031 000 B1**
(45) Date de publication et mention de la délivrance du brevet: **14.06.2017**
(21) Numéro de dépôt: 14748190.7
(22) Date de dépôt: 04.08.2014
(51) Int. Cl.: G06F 21/10, H04N 21/254, H04N 21/258, H04N 21/658, H04N 21/8355, H04N 21/6334

(54) **PROCEDE DE FOURNITURE D'UNE LICENCE DANS UN SYSTEME DE FOURNITURE DE CONTENUS MULTIMEDIAS**
VERFAHREN ZUR BEREITSTELLUNG EINER LIZENZ IN EINEM SYSTEM ZUR BEREITSTELLUNG VON MULTIMEDIA-INHALTEN
METHOD OF PROVIDING A LICENCE IN A SYSTEM FOR PROVIDING MULTIMEDIA CONTENTS

(30) Priorité: 09.08.2013 FR 1357946
(43) Date de publication de la demande: 15.06.2016
(73) Titulaire: Viaccess, 92057 Paris La Défense (FR)
(72) Inventeur: BOIVIN, Mathieu, F-93600 Aulnay-sous-Bois (FR)
(74) Mandataire: GIE Innovation Competence Group
(86) Numéro de dépôt international: PCT/EP2014/066678
(87) Numéro de publication internationale: WO 2015/018775

(56) Documents cités:
- WO-A1-00/21239
- WO-A2-00/58811

## Description

L'invention concerne un procédé de fourniture d'une licence dans un système de fourniture de contenus multimédias. L'invention concerne également un procédé de calcul d'une licence, pour la mise en oeuvre de ce procédé. L'invention concerne enfin un serveur de licences et un support d'enregistrement d'informations pour la mise en oeuvre de ce procédé.

Le système de fourniture de contenus multimédias considéré, est tout système support de tout service de fourniture en ligne de contenus multimédias à une pluralité de terminaux d'utilisateurs.

Un terminal d'un utilisateur est un terminal associé à cet utilisateur, c'est-à-dire dont un identifiant est enregistré en relation avec un identifiant de cet utilisateur. Ici, cet enregistrement est statique, résultant d'une saisie antérieure à l'utilisation du terminal par l'utilisateur. Par exemple, il fait suite à la déclaration, par l'opérateur du service ou par l'utilisateur, de ce que ce dernier est titulaire du terminal.

Un terminal est utilisé par un utilisateur du système de fourniture de contenus multimédias pour accéder à un contenu multimédia. Accéder à un contenu multimédia, signifie ici le jouer en clair, l'enregistrer, ou en faire toute autre utilisation offerte par le système de fourniture de contenus multimédias.

Les contenus multimédias fournis sont des contenus audiovisuels, par exemple des programmes de télévision, des contenus audio seulement, par exemple un programme radiophonique, ou plus généralement tout contenu numérique contenant de la vidéo et/ou de l'audio tel qu'une application informatique, un jeu, un diaporama, une image ou tout ensemble de données.

Un tel contenu multimédia, notamment lorsqu'il est l'objet de droits tels que des droits d'auteur ou des droits voisins, est typiquement fourni chiffré au titre de sa protection par un système de gestion de droits numériques, ou DRM, pour Digital Rights Management, en anglais. Ce chiffrement est typiquement réalisé au moyen d'une clé dite de contenu, par un algorithme symétrique.

La terminologie du domaine des systèmes de gestion de droits numériques est ainsi utilisée dans la suite de ce document. Le lecteur intéressé pourra par exemple en trouver une présentation plus complète dans les documents suivants :
- Concernant l'architecture générale d'un système de DRM :DRM Architecture, Draft version 2.0, OMA-DRM-ARCH-V2_0-20040518-D, Open Mobile Alliance, 18 mai 2004 - Concernant plus particulièrement les licences : DRM Specification, Draft version 2.1, OMA-TS-DRM-DRM-V2_1-20060523-D, Open Mobile Alliance, 23 mai 2006.

Dans un tel système de gestion de droits numériques, une licence permet à un terminal d'un utilisateur d'accéder à un contenu multimédia.

De structure bien connue de l'homme du métier, cette licence contient au moins une donnée d'accès nécessaire à ce terminal pour accéder au contenu. Cette donnée d'accès dépend d'un identifiant du contenu multimédia et d'un identifiant de l'utilisateur ou d'un terminal de l'utilisateur, au plus. Ainsi, chaque donnée d'accès est associée, par une relation injective ou bijective, à un seul couple d'identifiants, chaque couple d'identifiants étant formé par :
- l'identifiant du contenu multimédia, et
- l'identifiant de l'utilisateur ou d'un terminal de l'utilisateur.

Une donnée d'accès est typiquement :
- une règle d'accès, qui décrit les usages du contenu multimédia que le terminal de l'utilisateur est autorisé à faire, ou
- une clé de contenu, nécessaire au déchiffrement du contenu multimédia par un algorithme de déchiffrement, par exemple, symétrique.

La clé de contenu est généralement insérée dans la licence sous forme d'un cryptogramme obtenu par chiffrement de la clé de contenu avec une clé propre au terminal.

Le calcul de chaque licence requiert donc du serveur de licences des ressources non négligeables, notamment pour exécuter des algorithmes cryptographiques potentiellement complexes.

Dans un tel système de fourniture de contenus multimédias, un terminal souhaitant accéder à un contenu multimédia doit donc avoir obtenu la licence nécessaire. Cette obtention peut par exemple avoir lieu suite à un événement tel que :
- une prise d'abonnement au service par l'utilisateur auquel est associé le terminal,
- un renouvellement de cet abonnement,
- un achat du contenu multimédia par l'utilisateur, ou
- une demande d'accès au contenu par le terminal.

Un tel événement donne lieu à la soumission d'une requête de licence à un serveur de licences que comporte le système, puis, en réponse, au calcul et à la fourniture au terminal, par ce serveur, de la licence correspondante.

Un tel système de fourniture de contenus multimédias comporte généralement un grand nombre de terminaux d'utilisateurs. Dans ce contexte, son serveur de licences est donc susceptible d'être soumis à des pics de charge, en termes de nombre de requêtes de licences à traiter, et de ressources de calcul requises à cet effet, à certaines périodes, par exemple consacrées au renouvellement des abonnements, ou lors de la mise au catalogue du service, de contenus attendus.

Par ailleurs, la nature des services offerts par un tel système de fourniture de contenus multimédias, implique une répartition temporelle non homogène des requêtes de licences. En effet, dans le cas de services de télévision, et plus précisément de services de type « à la demande », il est connu que les achats de contenus multimédias, ou les demandes d'accès à ces contenus, et donc les requêtes de licences soumises au serveur de licences, sont plus nombreuses à certaines périodes de la journée, principalement aux moments où la majorité des utilisateurs est en mesure d'utiliser le système. Ce fait augmente encore le risque, pour le serveur de licences, d'être soumis aux pics de charge déjà mentionnés.

La complexité potentielle du calcul d'une licence déjà relevée, augmente elle aussi ce risque.

Le risque identifié de pics de charge du serveur de licences, menace la capacité de ce serveur à émettre, dans un temps limité de manière à ne pas pénaliser la qualité du service, les licences requises.

Il est donc particulièrement intéressant de limiter ce risque.

De l'état de la technique est également connu de :
- WO0058811A2,
- WO0021239A1.

L'invention vise à augmenter la capacité du serveur de licences à émettre, dans un temps limité, les licences requises.

L'invention a ainsi pour objet un procédé de fourniture d'une licence conforme à la revendication 1.

Dans un tel procédé, l'opération de pré-calcul d'au moins une donnée d'accès d'une licence, à l'étape e) antérieure à l'étape a) de réception de la requête de licence, permet, lors de l'étape b), de sélectionner la donnée pré-calculée sans avoir à la générer à ce moment là, et donc d'alléger ainsi la charge de calcul du serveur de licences en réponse à la réception de la requête de licence, si la licence requise est la licence pour laquelle ladite donnée d'accès a été pré-calculée.

Dans un tel procédé, l'obtention de la première liste de recommandation pour l'utilisateur, et la sélection, dans cette première liste, des identifiants de contenus utilisés pour l'opération de pré-calcul, permettent d'augmenter la probabilité que la licence requise à l'étape a) soit parmi celles pour lesquelles une donnée d'accès a été pré-calculée lors de l'étape e). On augmente ainsi la probabilité de la survenue de l'allègement de la charge de calcul du serveur de licences potentiellement procuré par l'opération de pré-calcul. La première liste de recommandation est en effet caractérisée comme contenant un nombre limité d'identifiants de contenus multimédias parmi un ensemble plus grand de contenus multimédias disponibles dans le système, les contenus multimédias identifiés par cette première liste ayant une probabilité plus grande d'être accédés par le terminal de l'utilisateur que les autres contenus multimédias de l'ensemble plus grand.

Les modes de réalisation de ce procédé de fourniture d'une licence peuvent comporter la caractéristique de la revendication 2.

Ces modes de réalisation de ce procédé de fourniture d'une licence présentent en outre l'avantage suivant :
- les opérations de transmission, au terminal ou à un autre terminal de l'utilisateur, de la première ou d'une seconde liste de recommandation construite pour cet utilisateur et d'affichage, par le ou ledit autre terminal de l'utilisateur, de cette première ou seconde liste de recommandation, permettent de favoriser la sélection par l'utilisateur d'un des identifiants de contenus multimédias pour lequel la donnée d'accès a été pré-calculée.

L'invention a également pour objet un procédé de calcul, par un serveur électronique de licences, pour la mise en oeuvre du procédé ci-dessus, d'une licence.

Les modes de réalisation de ce procédé de calcul d'une licence, peuvent comporter une ou plusieurs des caractéristiques des revendications dépendantes de procédé de calcul.

Ces modes de réalisation de ce procédé de calcul d'une licence présentent en outre les avantages suivants :
- les opérations de calcul de la charge de travail du serveur de licences et d'inhibition ou de déclenchement de l'étape e), en fonction de la charge de travail calculée, permettent de ne pas déclencher l'étape e) du procédé si la charge de travail calculée est déjà excessive, et donc de ne pas aggraver encore plus le pic de charge.

L'invention a également pour objet un support d'enregistrement d'informations comportant des instructions pour l'exécution de l'étape e) du procédé ci-dessus de calcul d'une licence, lorsque ces instructions sont exécutées par un calculateur électronique.

L'invention a enfin pour objet un serveur de licences comportant un calculateur électronique programmé pour déclencher et exécuter l'étape e) du procédé ci-dessus de calcul d'une licence.

L'invention sera mieux comprise à la lecture de la description qui va suivre, donnée uniquement à titre d'exemple non limitatif, et faite en référence aux dessins sur lesquels :
- La figure 1 est une représentation schématique de l'architecture d'un système de fourniture de contenus multimédias,
- La figure 2 est une représentation schématique d'un procédé de fourniture de de licence dans un système de fourniture de contenus multimédias.

Dans ces figures, les mêmes références sont données pour désigner les mêmes éléments.

Dans la suite de cette description, les caractéristiques bien connues de l'homme du métier ne sont pas décrites en détail.

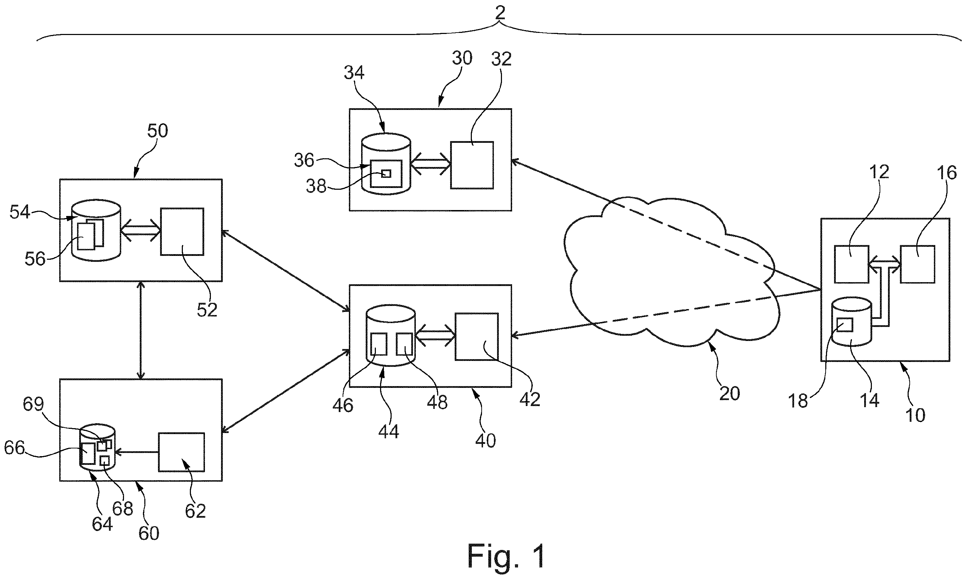

La figure 1 représente un système 2 de fourniture de contenus multimédias pour la mise en oeuvre d'un procédé de fourniture d'une licence.

Ce système 2 comprend une pluralité, typiquement des milliers, de terminaux d'utilisateurs, reliés, par l'intermédiaire d'un réseau 20, d'une part à un serveur 30 de contenus multimédias, et d'autre part à un portail 40 de service. Ici, on suppose que tous ces terminaux d'utilisateur sont identiques. Ainsi, pour simplifier l'illustration, seul un terminal 10 est représenté sur la figure 1.

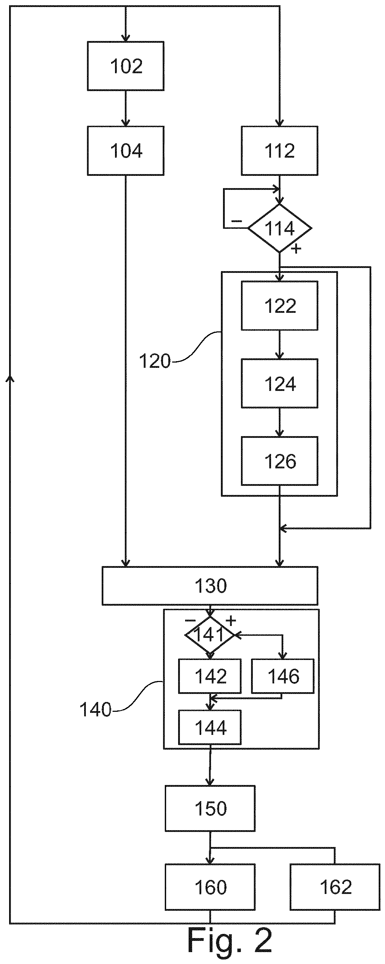

Le terminal 10 comporte un calculateur électronique 12 programmable, une mémoire 14 et une interface homme-machine 16. Le calculateur 12 est apte à exécuter des instructions enregistrées dans la mémoire 14. La mémoire 14 comporte les instructions nécessaires pour exécuter le procédé de la figure 2. De plus, la mémoire 14 comporte un identifiant 18 de terminal. Cet identifiant 18 identifie de façon unique le terminal 10 parmi l'ensemble des terminaux d'utilisateur du système 2.

L'interface homme-machine 16 comprend typiquement un écran et une télécommande permettant de sélectionner une zone particulière de l'écran.

Le réseau 20 est un réseau grande distance de distribution d'informations permettant d'établir une communication bidirectionnelle entre l'un quelconque des terminaux du système 2 et le portail 40 et le serveur 30. Par exemple, le réseau 20 est la toile d'araignée mondiale, plus connue sous le terme de « réseau Internet ».

Le serveur 30 permet à un terminal quelconque du système 2 d'obtenir, par exemple en téléchargeant, un contenu multimédia chiffré. A cet effet, le serveur 30 comporte un calculateur électronique 32 programmable et une mémoire 34. Le calculateur 32 est apte à exécuter des instructions enregistrées dans la mémoire 34. La mémoire 34 contient notamment les instructions nécessaires pour l'exécution du procédé de la figure 2. Cette mémoire 34 contient aussi une librairie 36. Cette librairie contient les contenus multimédias que chaque terminal peut télécharger au travers du réseau 20. Dans cette librairie 36, les contenus multimédias sont enregistrés sous forme chiffrée. Chaque contenu multimédia chiffré est obtenu en chiffrant le contenu multimédia en clair à l'aide de sa propre clé cryptographique K_{c} et d'un algorithme de chiffrement symétrique. Ainsi, la clé K_{c} utilisée pour chiffrer un contenu multimédia est uniquement utilisable pour déchiffrer ce contenu multimédia et pas un autre. Par « en clair » on désigne un contenu multimédia qui peut être restitué par un terminal de façon perceptible et directement compréhensible par un être humain sans avoir recours à une opération de déchiffrement. A titre d'exemple, la librairie 36 contient un contenu multimédia 38 tel qu'un film ou une musique.

Le portail 40 permet au terminal 10 d'obtenir une licence propre à lui permettre d'accéder à un contenu multimédia pour lequel son utilisateur a acquis légalement des droits d'accès.

Le portail 40 est à cet effet relié à un moteur 50 de recommandation, et à un serveur 60 de licences.

Ici, le portail 40 comporte un calculateur électronique 42 programmable et une mémoire 44. Le calculateur 42 est apte a exécuter des instructions enregistrées dans la mémoire 44 pour mettre en oeuvre le procédé de la figure 2.

La mémoire 44 contient en plus une liste 46 des utilisateurs du système 2. Cette liste 46 contient une description de chacun de ces utilisateurs et, notamment, un identifiant pour chacun des utilisateurs. Cet identifiant, dit d'utilisateur, permet d'identifier de façon unique l'utilisateur parmi l'ensemble des utilisateurs du système 2. Cette description comporte aussi typiquement une description des droits d'accès de l'utilisateur aux contenus multimédias offerts par le service.

La mémoire 44 contient aussi une liste 48 des terminaux de chacun des utilisateurs du système. Cette liste contient une description de chacun des terminaux de l'utilisateur. Elle associe donc, notamment, à chaque identifiant d'utilisateur un ou plusieurs identifiants de terminal.

Le portail 40 est apte à maintenir ces listes 46 et 48, c'est-à-dire à y ajouter, modifier ou supprimer une description.

Le moteur 50 de recommandation est apte à construire automatiquement, à partir d'un identifiant d'un utilisateur ou de son terminal, une liste de recommandation pour cet utilisateur. Une liste de recommandation est une liste contenant un nombre limité d'identifiants de contenus multimédias sélectionnés parmi l'ensemble des contenus multimédias accessibles dans le système 2. Chaque identifiant de contenu multimédia identifie de façon unique un contenu multimédia parmi l'ensemble des contenus multimédias accessibles dans le système 2. Les contenus multimédias identifiés par cette liste ont chacun une probabilité plus grande d'être accédé par le terminal de l'utilisateur que les autres contenus multimédias du système 2 non sélectionnés. Typiquement, chaque liste de recommandation comporte moins de N/4 ou N/10 ou N/100 ou encore N/1000 identifiants de contenus multimédias, où N est le nombre total d'identifiants de contenus multimédias accessibles dans le système 2. Par exemple, la liste de recommandation comporte de un à cent identifiants de contenus multimédias. Des algorithmes de recommandation permettant de construire automatiquement cette liste sont bien connus et ne seront pas décrits ici en détail. Par exemple, le lecteur pourra se référer à la demande de brevet US 2005/0193414. A cet effet, le moteur 50 comporte un calculateur électronique 52 programmable et une mémoire 54. Le calculateur 52 est apte à exécuter des instructions enregistrées dans la mémoire 54 pour mettre en oeuvre le procédé de la figure 2. En particulier, la mémoire 54 comporte les instructions de l'algorithme de recommandation. La mémoire 54 comporte en plus une base 56 de données permettant de calculer la probabilité qu'un contenu multimédia donné soit accédé par un terminal ou un utilisateur donné. A cet effet, typiquement, la base 56 contient pour chaque terminal ou chaque utilisateur:
- un historique contenant les identifiants des contenus multimédias auxquels ce terminal ou cet utilisateur a déjà accédé par le passé, et/ou
- des données concernant l'utilisateur du terminal 10, tel que son âge, son sexe, sa nationalité ou son appartenance à une catégorie prédéterminée d'utilisateurs.

Les données de l'utilisateur peuvent être retrouvées grâce à l'identifiant de terminal et à l'aide de la liste 48. En effet, la liste 48 permet de retrouver l'identifiant de l'utilisateur auquel appartient le terminal à partir de l'identifiant de terminal. Ensuite, il est possible de consulter la description de l'utilisateur associée par la liste 46 à l'identifiant d'utilisateur trouvé dans la liste 48.

Le serveur 60 de licences est apte à calculer et à fournir une licence permettant à un terminal d'utilisateur d'accéder à un contenu multimédia.

Le serveur 60 de licences comporte à cet effet une mémoire 64 et un calculateur électronique 62 programmable apte à exécuter des instructions enregistrées sur un support d'enregistrement. A cet effet, le calculateur 64 est raccordé à la mémoire 62. Cette mémoire 62 comporte les instructions nécessaires pour mettre en oeuvre le procédé de la figure 2. Ces instructions comportent notamment celles d'un algorithme de calcul d'une licence.

La mémoire 64 du serveur 60 de licences contient une liste 66 de l'ensemble des terminaux du système 2. Cette liste contient une description de chacun de ces terminaux et, notamment son identifiant de terminal. Cette description comporte typiquement au moins une clé cryptographique K_{T} propre à chaque terminal considéré ou à un groupe de terminaux d'un utilisateur. Ici, la clé K_{T} est différente d'un terminal à l'autre.

La mémoire 64 contient aussi une liste 68 de l'ensemble des contenus multimédias accessibles par les terminaux dans le système 2. Cette liste contient une description de chacun de ces contenus multimédias et, notamment, l'identifiant de chaque contenu multimédia. De plus, cette liste 68 associe à chacun des identifiants de contenu multimédia :
- la clé K_{c} de contenu utilisée pour chiffrer ce contenu multimédia, et de préférence,
- des règles d'accès prédéfinies à ce contenu multimédia.

Les règles d'accès définissent typiquement ce qu'un terminal peut faire avec ce contenu multimédia. Par exemple, ce sont ces règles d'accès qui précisent :
- le nombre de fois où le contenu multimédia peut être accédé,
- la période de temps pendant laquelle il peut être accédé, ou
- si le contenu multimédia peut être enregistré ou non sur un support d'enregistrement.

Le serveur 60 de licences est apte à maintenir ces listes 66 et 68, c'est-à-dire à y ajouter, modifier ou supprimer une description.

La mémoire 64 contient aussi une base 69 de données d'accès pré-calculées. Ici, une donnée d'accès est un cryptogramme K_{c}* obtenu en chiffrant la clé K_{c} associée à un contenu multimédia par la liste 68, avec la clé K_{T} d'un terminal.

Plus précisément, la base 69 associe ensemble un identifiant de contenu multimédia, un identifiant de terminal et la donnée d'accès pré-calculée pour le contenu multimédia et le terminal spécifiés par les deux identifiants précédents. Ainsi, cette donnée d'accès pré-calculée comporte notamment le cryptogramme K_{c}* obtenu en chiffrant la clé K_{c}, associée par la liste 68 à cet identifiant de contenu multimédia, avec la clé K_{T} associée par la liste 66 à cet identifiant de terminal.

L'architecture ci-dessus présentée du système de fourniture de contenus est à caractère fonctionnel, et en tant que telle susceptible d'être projetée sur de multiples architectures techniques. Ainsi, le serveur 30 de contenus multimédias et le portail 40 de service, peuvent-ils résider sur une même machine informatique ou sur des machines distinctes. Il en est de même du portail 40, du moteur 50 et du serveur 60 de licences. Enfin, le portail 40 regroupant l'ensemble de la logique du service qui ne relève pas du moteur 50 de recommandation ou du serveur 60 de licences, son analyse fonctionnelle est susceptible de mener à en définir des composants fonctionnels pouvant à leur tour résider sur une même machine informatique, chacun sur une machine distincte, ou, de façon intermédiaire, par groupes sur des machines distinctes.

Le fonctionnement du système 2 va maintenant être décrit en référence au procédé de la figure 2

dans le cas particulier où le terminal 10 est utilisé pour accéder au contenu multimédia 38.

Initialement, le terminal 10 se connecte au portail 40 à travers le réseau 20. Lors de l'établissement de cette connexion, l'identifiant 18 du terminal 10 est transmis au portail 40. En réponse, le portail 40 trouve dans la liste 48 l'identifiant d'utilisateur associé à l'identifiant 18 et transmet cet identifiant d'utilisateur au moteur 50 de recommandation.

Ensuite, lors d'une étape 102, le moteur 50 de recommandation construit une liste de recommandations pour l'utilisateur du terminal 10. La probabilité qu'un contenu multimédia soit accédé à partir du terminal 10 est calculée à partir des données contenues dans la base 56 de données. Ici, la liste de recommandations construite est propre à chaque utilisateur, c'est-à-dire qu'elle est construite en fonction de l'identifiant d'utilisateur reçu. Dès lors, normalement, la liste de recommandations varie d'un identifiant d'utilisateur à l'autre. Une fois construite, la liste de recommandations est transmise au portail 40.

Lors d'une étape 104, le portail 40 transmet cette liste de recommandations construite au terminal 10. En réponse, le terminal 10 la communique à l'utilisateur par l'intermédiaire de son interface homme-machine 16. Par exemple, le terminal 10 affiche la liste de recommandations sur l'écran du terminal 10. Ici, cette liste est affichée de manière à ce que l'utilisateur puisse facilement sélectionner un identifiant de contenu multimédia parmi ceux affichés. Toutefois, si aucun des contenus multimédias de la liste de recommandations n'intéresse l'utilisateur, le terminal 10, par l'intermédiaire de son interface homme-machine 16, permet à l'utilisateur de sélectionner l'identifiant d'un autre contenu multimédia qui ne fait pas partie de cette liste de recommandation.

Une fois que l'utilisateur a sélectionné l'identifiant d'un contenu multimédia auquel il souhaite accéder, cet identifiant est transmis du terminal 10 au portail 40 par l'intermédiaire du réseau 20. Le portail 40, en réponse, transmet une requête au serveur 60 contenant à la fois l'identifiant du contenu multimédia sélectionné par l'utilisateur et l'identifiant du terminal 10. Par la suite, on suppose que l'identifiant sélectionné correspond au contenu multimédia 38.

Ainsi, lors d'une étape 130, le serveur 60 reçoit cette requête.

En réponse, lors d'une étape 140, le serveur 60 calcule une licence contenant les informations nécessaires pour autoriser le terminal 10 à accéder au contenu multimédia 38. Comme indiqué précédemment, cette licence contient notamment au moins une données d'accès.

Plus précisément, l'étape 140 débute par une opération 141 lors de laquelle le serveur 60 recherche dans la base 69 de données si l'identifiant 18 est associé à l'identifiant du contenu multimédia contenu dans la requête reçue. Si l'identifiant 18 et l'identifiant 38 ne sont pas associés l'un à l'autre dans la base 69, alors le serveur 60 procède immédiatement à une opération 142 de génération des données d'accès correspondant aux identifiants 18 et 38 contenus dans la requête reçue lors de l'étape 130. En particulier, lors de l'opération 142, le serveur 60 construit le cryptogramme K_{c}* obtenu en chiffrant les clés K_{c} utilisée pour chiffrer le contenu 38 avec la clé K_{T} du terminal 10 et en utilisant un algorithme de chiffrement, typiquement symétrique, connu à la fois du serveur 60 et du terminal 10. La clé K_{T} est obtenue en recherchant la clé associée à l'identifiant 18 dans la liste 66. La clé K_{c} est quant à elle obtenue en recherchant dans la liste 68 la clé de contenu associée à l'identifiant 38. Eventuellement, les règles d'accès associées à ce contenu multimédia 38 par la liste 68 sont également extraites pour être incorporées dans une autre donnée d'accès construite.

Ensuite, lors d'une opération 144, le serveur 60 finalise le calcul de la licence en y incorporant des données supplémentaires telle qu'un aléa permettant d'éviter les attaques par rejeu ou une date de validité de la licence calculée à partir de la date de réception de la requête.

Si lors de l'opération 141, le serveur 60 détermine que l'identifiant 18 et l'identifiant 38 sont associés l'un à l'autre dans la base 69, alors au lieu de procéder à l'opération 142, le serveur 60 procède immédiatement à une opération 146.

Lors de l'opération 146, le serveur 60 sélectionne automatiquement la donnée d'accès pré-calculée associée à la fois, dans la base 69, à l'identifiant 18 et à l'identifiant 38. Ensuite, le serveur 60 procède à l'opération 144. Toutefois, dans ce cas, lors de l'opération 144, les données d'accès pré-calculées sont utilisées à la place de celles construites lors de l'opération 142. Ainsi, lorsque l'opération 146 est exécutée, l'opération 142 ne l'est pas. Dès lors, l'exécution de l'étape 140 est beaucoup plus rapide puisque aucune opération de chiffrement de la clé K_{c} avec la clé K_{T} n'est exécutée. Le serveur 60 est donc capable de traiter beaucoup plus de requêtes dans le même temps avec les mêmes ressources matérielles par rapport au cas où aucune donnée d'accès n'est pré-calculée.

Le pré-calcul des données d'accès se fait avant l'étape 130, lors d'étapes 112, 114 et 120 qui sont décrites en détail plus loin.

Une fois le calcul de la licence terminé, lors d'une étape 150, le serveur 60 transmet la licence au portail 40 qui la transmet à son tour au terminal 10.

Lors d'une étape 160, le terminal 10 reçoit la licence calculée. En réponse, il déchiffre le cryptogramme K_{c}* avec sa clé K_{T} pour extraire la clé K_{c}.

En parallèle, lors d'une étape 162, le terminal 10 télécharge le contenu multimédia 38 à partir du serveur 30 et au travers du réseau 20. Ensuite, une fois ce téléchargement terminé, il accède au contenu multimédia 38. Pour cela, le terminal 10 déchiffre le contenu multimédia 38 avec la clé K_{c} extraite de la licence reçue de manière à obtenir le contenu multimédia 38 en clair. Ensuite, le contenu multimédia 38 en clair est joué sur l'interface homme-machine 16 du terminal 10 de manière à ce qu'il soit directement perceptible et compréhensible par un être humain.

Par exemple, l'étape 112 est initiée lorsque le serveur 60 de licences reçoit du portail 40 une liste d'identifiants de nouveaux utilisateurs du système, une liste d'identifiants de nouveaux terminaux d'utilisateurs, une liste d'identifiants de contenus multimédias nouvellement accédés par des terminaux d'utilisateurs, une liste d'identifiants d'utilisateurs désinscrits, ou une liste d'identifiants de terminaux désinscrits. Lorsqu'un utilisateur ou un terminal est désinscrit, c'est qu'il ne fait plus parti du système 2.

La nouveauté s'entend ici depuis la dernière mise en oeuvre de l'étape 112. L'étape 112 est par exemple mise en oeuvre, automatiquement ou à l'initiative de l'opérateur du service, au fil de l'eau, c'est-à-dire au fur et à mesure de l'enregistrement et de la désinscription d'utilisateurs ou de terminaux d'utilisateurs, et d'accès de terminaux d'utilisateurs à des contenus multimédias.

Lors de cette étape 112, en cas de réception d'une liste d'identifiants de nouveaux terminaux d'utilisateurs ou de terminaux désinscrits, le serveur 60 de licences ajoute ou supprime de sa liste 66, la description de chacun de ces terminaux.

Lors de cette étape 112, en cas de réception d'une liste d'identifiants de contenus multimédias nouvellement accédés par des terminaux d'utilisateurs ou supprimés du serveur 30, le serveur 60 de licences ajoute ou supprime de sa liste 68, la description de chacun de ces contenus multimédias.

Lors de cette étape 112 le serveur 60 de licences met à jour une liste des utilisateurs actifs depuis le dernier déclenchement de l'étape 120. Cette liste contient les identifiants des nouveaux utilisateurs du système, les identifiants des utilisateurs des nouveaux terminaux, et les identifiants des utilisateurs des terminaux ayant nouvellement accédé à au moins un contenu multimédia. Les identifiants des utilisateurs désinscrits sont supprimés de cette liste.

Ensuite, lors d'une étape 114, le serveur 60 de licences calcule sa propre charge de travail en fonction du nombre des requêtes qu'il a reçues au cours d'un intervalle de temps donné, et de la durée de cet intervalle de temps. Les requêtes dont il s'agit sont celles reçues lors des itérations de l'étape 130 pour l'ensemble des terminaux du système 2. Cet interval de temps a par exemple la date courante pour date de fin, et une durée prédéterminée de quelques minutes à quelques heures. Il s'agit par exemple des cinq dernières minutes écoulées ou de la dernière demie heure écoulée. Bien sûr, tout autre intervalle de temps peut être pris en compte, notamment en fonction de la période attendue des fluctuations de la charge de travail. La charge de travail du serveur 60 de licences est par exemple évaluée comme le nombre de requêtes reçues pendant l'intervalle de temps divisé par la durée de cette intervalle de temps. Toute autre méthode d'évaluation de cette charge de travail à disposition de l'homme du métier peut cependant bien sûr être appliquée.

Lors de l'étape 114, le serveur 60 de licences inhibe ou déclenche ensuite l'étape 120. La décision est prise en fonction de la charge de travail calculée. Typiquement, si la charge de travail calculée est suffisamment faible, l'étape 120 est déclenchée, et elle est inhibée sinon. Par exemple, un seuil S1 est préalablement fixé et l'étape 120 est déclenchée si la charge de travail calculée est inférieure à ce seuil S1 et, dans le cas contraire, inhibée.

Pour déclencher l'étape 120, le serveur 60 de licences transmet, au moteur 50 de recommandation, l'un au moins des éléments de la liste des utilisateurs actifs du système, et supprime de cette liste les éléments transmis.

Lors de l'étape 120, le serveur 60 de licences pré-calcule des licences.

A cet effet, lors d'une opération 122, le moteur 50 de recommandation produit une liste de recommandation pour chaque terminal des utilisateurs actifs du système dont il a reçu l'identifiant. Ici, chaque liste de recommandation est construite en utilisant le même algorithme de recommandation et la même base 56 que ceux utilisés lors de l'étape 102. Ainsi, chaque listes de recommandation comporte, de préférence, plus de 50 %, et généralement plus de 80 %, d'identifiants de contenus multimédias en commun avec la liste construite pour le même utilisateur lors d'une exécution ultérieure de l'étape 102. Toutefois, les listes construites lors de l'étape 102 et de l'opération 122 pour le même utilisateur peuvent ne pas être rigoureusement identiques, par exemple, car la base 56 a été modifiée entre les exécutions de l'opération 122 et de l'étape 102.

Ici, le moteur 50 retourne ensuite chacune de ces listes de recommandation au serveur 60 de licences, et non, comme dans une utilisation classique, au portail 40 pour affichage par un terminal de l'utilisateur concerné.

Ensuite, lors d'une opération 124, le serveur 60 de licences sélectionne, dans au moins l'une des listes de recommandation reçues et, typiquement, dans chaque liste de recommandation reçue, au moins un identifiant de contenu multimédia. Le mode de sélection utilisé ici est un choix de conception essentiellement guidé par la taille des listes de recommandation produites par le moteur 50 et par les capacités de calcul du serveur 60 de licences. Par exemple, tous les identifiants de contenus multimédias de chaque liste de recommandation reçue sont sélectionnés, un nombre fixe d'entre eux, ou un nombre dépendant de la charge de travail du serveur 60 de licences préalablement calculée.

Ensuite, lors d'une opération 126, le serveur 60 de licences pré-calcule, pour chaque identifiant sélectionné, la donnée d'accès permettant au terminal de l'utilisateur concerné d'accéder au contenu multimédia d'identifiant sélectionné.

Le serveur 60 de licences mémorise ensuite dans la base 69, en relation avec l'identifiant du contenu multimédia sélectionné et avec l'identifiant du terminal considéré de l'utilisateur, la donnée d'accès pré-calculée.

De nombreux autres modes de réalisation de l'invention sont possibles. Par exemple, l'association d'un terminal à un utilisateur, est dynamique, par exemple résultant de la connexion, au moyen du terminal, de l'utilisateur au service.

En variante, l'identifiant d'utilisateur transmis au moteur 50 de recommandation est remplacé par l'identifiant 18 du terminal de cet utilisateur. Dans ce mode de réalisation, la liste de recommandation est construite pour chaque identifiant de terminal et non pas pour chaque utilisateur.

Dans un autre mode de réalisation, le contenu multimédia peut être fourni, par le système de fourniture de contenus multimédias, chiffré avec plusieurs clés au titre de sa protection par le système de gestion de droits numériques. Plusieurs licences, contenant chacune au moins l'une de ces clés de contenu, peuvent alors être nécessaires au terminal pour accéder au contenu multimédia. Le procédé revendiqué s'applique alors à l'une, au moins, de ces licences.

De façon alternative, le contenu multimédia peut être fourni protégé par un système de gestion de droits numériques sans toutefois être chiffré. La clé de contenu ne figure alors pas parmi les données d'accès insérées dans la licence.

Dans un autre mode de réalisation, le contenu multimédia est fourni protégé par un système d'accès conditionnel, ou CAS, pour Conditional Access System. La terminologie du domaine des systèmes d'accès conditionnel est alors utilisée. Le lecteur intéressé pourra par exemple en trouver une présentation plus complète dans le document : « Functional Model of a Conditional Access System », EBU Review, Technical European Broadcasting Union, Bruxels, BE, N° 266, le 21 décembre 1995. Le procédé revendiqué s'applique alors à la fourniture des mots de contrôle chiffrés avec la clé K_{T} du terminal, ou des messages EMM nécessaires à l'acheminement des droits ou des clés d'exploitation, notamment.

Dans un autre mode de réalisation, le contenu multimédia peut également être fourni, par le système, protégé par tout autre type de système de protection de contenus, tel par exemple qu'un système de protection de données plus classique ne réalisant pas de gestion de droits d'accès. Le procédé revendiqué s'applique alors à la fourniture des messages nécessaires à l'acheminement des clés de chiffrement, par exemple.

Dans un autre mode de réalisation, le réseau 20 est tout réseau grande distance de distribution d'informations autre que le réseau Internet, offrant un lien bidirectionnel connecté ou non, entre les terminaux et le portail 40.

De façon alternative, les terminaux sont reliés au serveur 30 de contenus et au portail 40 de service, par deux réseaux respectifs distincts, de même nature ou non.

Les différentes listes décrites précédemment peuvent être enregistrées et maintenues de façon différentes. Par exemple, la liste 46 des utilisateurs du système et la liste 48 des terminaux de chacun d'eux, sont contenues dans, et maintenues par, un sous-système de gestion de clients distinct du portail 40, voire intégré au serveur 60 de licences.

En variante, la donnée d'accès est uniquement une règle d'accès associée au contenu multimédia et au terminal concernés.

Dans une autre variante, la clé K_{T} est commune à un groupe de terminaux et non pas propre à un seul terminal. Toutefois, même dans ce cas, le nombre de terminaux appartenant à ce groupe est 100 ou 1000 ou 10000 fois plus petit que le nombre total de terminaux du système 2.

Dans un autre mode de réalisation, l'étape 112 est initiée lorsque le serveur 60 de licences détecte qu'une durée donnée s'est écoulée depuis le dernier déclenchement de l'étape 120. Ce mode de réalisation est celui d'un déclenchement périodique de l'étape 120 de pré-calcul.

Dans un autre mode de réalisation, à l'étape 114, pour déclencher l'étape 120, le serveur 60 de licences transmet, au moteur 50 de recommandation, l'un au moins des éléments de la liste des utilisateurs actifs du système, par l'intermédiaire du portail 40.

Dans un autre mode de réalisation, l'étape 114 est exécutée par tout composant du système distinct du serveur 60 de licences, par exemple par le portail 40.

En variante, lors de l'étape 114, la tendance des dernières valeurs calculées de la charge de travail du serveur 60 de licences est prise en compte, en plus de sa dernière valeur calculée, pour décider de l'inhibition ou du déclenchement de l'étape 120. Par exemple, en fonction des ressources de calcul du serveur 60 de licences restant disponibles et de celles estimées nécessaire à l'exécution de l'étape 120, la décision peut être prise d'inhiber ou de déclencher l'étape 120 pour certains utilisateurs seulement parmi ceux qui sont a priori concernés, en fonction de leur nombre, ou de toute autre donnée les concernant contenue dans le système. Toute autre méthode de décision à disposition de l'homme du métier peut cependant bien sûr être appliquée.

De façon alternative, l'étape 114 est omise.

Les algorithmes de recommandation utilisés pour construire les listes de recommandation lors de l'étape 102 et de l'opération 122 ne sont pas nécessairement les mêmes. La base de données utilisée pour cela lors de l'opération 122 peut aussi être différente de la base de données 56. Toutefois, même dans ces cas, le nombre d'identifiants de contenus multimédias communs entre les listes construites pour le même utilisateur lors de l'étape 102 et de l'opération 122, a de forte chance d'être élevé puisque ces deux algorithmes ont tous les deux le même objectif, à savoir identifier les contenus multimédias qui ont le plus de chance d'être accédé par l'utilisateur.

Dans le cas où l'ensemble des données nécessaires au calcul d'une licence complète est déjà connu avant de recevoir une requête pour cette licence lors de l'étape 130, alors, lors de l'opération 126, le serveur 60 de licences peut calculer, c'est-à-dire pré-calculer, puis mémoriser en relation avec l'identifiant du contenu multimédia sélectionné et avec l'identifiant du terminal considéré de l'utilisateur, la licence entière. Dans ce cas, à l'issue de l'opération 146, le procédé se poursuit directement par l'étape 150.

## Revendications

1. Procédé de fourniture, par un serveur électronique de licences, dans un système de fourniture de contenus multimédias, d'une licence permettant à un terminal d'un utilisateur du système d'accéder à un contenu multimédia, cette licence étant fonction à la fois d'un identifiant du contenu multimédia et d'un identifiant du terminal ou de l'utilisateur, procédé dans lequel :
a) le serveur reçoit (130) une requête comportant l'identifiant du contenu multimédia et l'identifiant du terminal ou de l'utilisateur,
b) le serveur calcule (140) une licence comportant au moins une donnée d'accès nécessaire au terminal pour accéder au contenu, cette donnée d'accès étant fonction de l'identifiant du contenu multimédia et de l'identifiant du terminal ou de l'utilisateur,
c) le serveur transmet (150), en réponse à la requête, la licence calculée à l'étape b),
d) le terminal reçoit (160) la licence calculée à l'étape c), et l'utilise pour accéder au contenu multimédia,
**caractérisé en ce que** :
- avant l'étape a) le procédé comporte une étape e) (120) contenant :
• l'obtention (122) d'une première liste de recommandation pour cet utilisateur, cette première liste contenant un nombre limité d'identifiants de contenus multimédias parmi un ensemble plus grand de contenus multimédias disponibles dans le système, les contenus multimédias identifiés par cette première liste ayant une probabilité plus grande d'être accédés par le terminal de l'utilisateur que les autres contenus multimédias de l'ensemble plus grand, cette première liste étant construite en fonction de l'identifiant de l'utilisateur et d'une base de données préenregistrées à partir desquels il est possible de calculer une probabilité qu'un contenu multimédia quelconque disponible dans le système soit accédé par le terminal de l'utilisateur,
• la sélection (124) automatique, dans cette première liste, d'au moins un identifiant de contenu multimédia, et
• pour chaque identifiant automatiquement sélectionné, le pré-calcul (126) d'au moins une donnée d'accès en utilisant cet identifiant de contenu multimédia et l'identifiant du terminal ou de l'utilisateur, et
- lors de l'étape b), le serveur recherche (141) l'identifiant du contenu multimédia reçu à l'étape a) parmi les identifiants automatiquement sélectionnés à l'étape e), puis, en cas de succès, sélectionne la donnée d'accès pré-calculée correspondant à cet identifiant, et, en cas d'échec, génère (142) cette donnée d'accès.

2. Le procédé selon la revendication 1, dans lequel l'étape a) est précédée :
- de la transmission (104), au terminal ou à un autre terminal de l'utilisateur, de la première ou d'une seconde liste de recommandation construite pour cet utilisateur et contenant au moins l'un des identifiants automatiquement sélectionnés à l'étape e),
- de l'affichage, par le ou ledit autre terminal de l'utilisateur, de cette première ou seconde liste de recommandation, de manière à favoriser la sélection par l'utilisateur d'un des identifiants de contenus multimédias automatiquement sélectionnés à l'étape e) pour sa transmission au serveur de licence lors de l'étape a).

3. Procédé de calcul, par un serveur électronique de licences, pour la mise en oeuvre du procédé de la revendication 1, d'une licence permettant à un terminal d'un utilisateur du système d'accéder à un contenu multimédia, cette licence étant fonction à la fois d'un identifiant du contenu multimédia et d'un identifiant du terminal ou de l'utilisateur, procédé dans lequel le serveur :
a) reçoit (130) une requête comportant l'identifiant du contenu multimédia et l'identifiant du terminal ou de l'utilisateur,
b) calcule (140) une licence comportant au moins une donnée d'accès nécessaire au terminal pour accéder au contenu, cette donnée d'accès étant fonction de l'identifiant du contenu multimédia et de l'identifiant du terminal ou de l'utilisateur,
c) transmet (150), en réponse à la requête, la licence calculée à l'étape b),
**caractérisé en ce que** :
- avant l'étape a) le procédé comporte une étape e) (120) contenant :
• l'obtention (122) d'une première liste de recommandation pour cet utilisateur, cette première liste contenant un nombre limité d'identifiants de contenus multimédias parmi un ensemble plus grand de contenus multimédias disponibles dans le système, les contenus multimédias identifiés par cette première liste ayant une probabilité plus grande d'être accédés par le terminal de l'utilisateur que les autres contenus multimédias de l'ensemble plus grand, cette première liste étant construite en fonction de l'identifiant de l'utilisateur et d'une base de données préenregistrées à partir desquels il est possible de calculer une probabilité qu'un contenu multimédia quelconque disponible dans le système soit accédé par le terminal de l'utilisateur,
• la sélection (124) automatique, dans cette première liste, d'au moins un identifiant de contenu multimédia, et
• pour chaque identifiant automatiquement sélectionné, le pré-calcul (126) d'au moins une donnée d'accès en utilisant cet identifiant de contenu multimédia et l'identifiant du terminal ou de l'utilisateur,
- lors de l'étape b), le serveur recherche (141) l'identifiant du contenu multimédia reçu à l'étape a) parmi les identifiants automatiquement sélectionnés à l'étape e), puis, en cas de succès, sélectionne la donnée d'accès pré-calculée correspondant à cet identifiant, et, en cas d'échec, génère (142) cette donnée d'accès.

4. Le procédé selon la revendication 3, dans lequel le procédé comporte :
- le calcul (141) de la charge de travail du serveur en fonction du nombre de requêtes à traiter par le serveur au cours d'un intervalle de temps, et de la durée de cet intervalle de temps, et
- l'inhibition ou le déclenchement de l'étape e), en fonction de la charge de travail calculée.

5. Le procédé selon l'une quelconque des revendications 3 à 4, dans lequel l'étape e) (120) est déclenchée en réponse à la réception :
- d'une liste d'identifiants de nouveaux utilisateurs du système, cette liste comportant l'identifiant de l'utilisateur,
- d'une liste d'identifiants de nouveaux terminaux de l'utilisateur,
- d'une liste d'identifiants de contenus nouvellement accédés par l'utilisateur,
- d'une liste d'identifiants d'utilisateurs désinscrits du système, ou
- d'une liste d'identifiant de terminaux désinscrits du système.

6. Support d'enregistrement d'informations, **caractérisé en ce qu'**il comporte des instructions pour l'exécution de l'étape e) d'un procédé conforme à l'une quelconque des revendications 3 à 5, lorsque ces instructions sont exécutées par un calculateur électronique.

7. Serveur de licences, **caractérisé en ce que** ce serveur comporte un calculateur électronique (62) programmé pour déclencher et exécuter l'étape e) d'un procédé de calcul d'une licence conforme à l'une quelconque des revendications 3 à 5.

## Patentansprüche

1. Verfahren zur Bereitstellung, durch einen elektronischen Lizenzserver, in einem System zur Bereitstellung von Multimedia-Inhalten, einer Lizenz, die einem Endgerät eines Benutzers des Systems ermöglicht, auf einen Multimedia-Inhalt zuzugreifen, wobei diese Lizenz gleichzeitig von einer Kennung des Multimedia-Inhalts und von einer Kennung des Endgeräts oder des Benutzers abhängt, wobei in dem Verfahren:
a) der Server eine Anforderung empfängt (130), welche die Kennung des Multimedia-Inhalts und die Kennung des Endgeräts oder des Benutzers umfasst,
b) der Server eine Lizenz berechnet (140), die wenigstens eine Zugangsdateneinheit umfasst, welche das Endgerät benötigt, um auf den Inhalt zuzugreifen, wobei diese Zugangsdateneinheit von der Kennung des Multimedia-Inhalts und von der Kennung des Endgeräts oder des Benutzers abhängt,
c) der Server in Reaktion auf die Anforderung die in Schritt b) berechnete Lizenz sendet (150);
d) das Endgerät die in Schritt c) berechnete Lizenz empfängt (160) und sie verwendet, um auf den Multimedia-Inhalt zuzugreifen,
**dadurch gekennzeichnet, dass**:
- das Verfahren vor Schritt a) einen Schritt e) (120) umfasst, welcher enthält:
• die Gewinnung (122) einer ersten Empfehlungsliste für diesen Benutzer, wobei diese erste Liste eine begrenzte Anzahl von Kennungen von Multimedia-Inhalten aus einer größeren Gesamtheit von Multimedia-Inhalten, die in dem System verfügbar sind, enthält, wobei die durch diese erste Liste identifizierten Multimedia-Inhalte eine größere Wahrscheinlichkeit aufweisen, dass durch das Endgerät des Benutzers auf sie zugegriffen wird, als die anderen Multimedia-Inhalte der größeren Gesamtheit, wobei diese erste Liste in Abhängigkeit von der Kennung des Benutzers und von einer Datenbank vorerfasster Daten, aus denen es möglich ist, eine Wahrscheinlichkeit zu berechnen, dass auf irgendeinen in dem System verfügbaren Multimedia-Inhalt durch das Endgerät des Benutzers zugegriffen wird, erstellt wird,
• die automatische Auswahl (124) wenigstens einer Kennung eines Multimedia-Inhalts in dieser ersten Liste, und
• für jede automatisch ausgewählte Kennung die Vorausberechnung (126) wenigstens einer Zugangsdateneinheit unter Verwendung dieser Kennung eines Multimedia-Inhalts und der Kennung des Endgeräts oder des Benutzers, und
- in Schritt b) der Server die in Schritt a) empfangene Kennung des Multimedia-Inhalts in den in Schritt e) automatisch ausgewählten Kennungen sucht (141), anschließend im Erfolgsfall die dieser Kennung entsprechende vorausberechnete Zugangsdateneinheit auswählt und im Falle eines Fehlschlags diese Zugangsdateneinheit erzeugt (142).

2. Verfahren nach Anspruch 1, wobei dem Schritt a) vorausgehen:
- die Übertragung (104), an das Endgerät oder an ein anderes Endgerät des Benutzers, der ersten oder einer zweiten Empfehlungsliste, die für diesen Benutzer erstellt wurde und wenigstens eine der Kennungen enthält, die in Schritt e) automatisch ausgewählt wurden,
- die Anzeige, durch das oder das andere Endgerät des Benutzers, dieser ersten oder zweiten Empfehlungsliste, um die Auswahl einer der in Schritt e) automatisch ausgewählten Kennungen von Multimedia-Inhalten durch den Benutzer für ihre Übertragung zu dem Lizenzserver in Schritt a) zu begünstigen.

3. Verfahren zur Berechnung, durch einen elektronischen Lizenzserver, für die Durchführung des Verfahrens nach Anspruch 1, einer Lizenz, die einem Endgerät eines Benutzers des Systems ermöglicht, auf einen Multimedia-Inhalt zuzugreifen, wobei diese Lizenz gleichzeitig von einer Kennung des Multimedia-Inhalts und von einer Kennung des Endgeräts oder des Benutzers abhängt, wobei in dem Verfahren der Server:
a) eine Anforderung empfängt (130), welche die Kennung des Multimedia-Inhalts und die Kennung des Endgeräts oder des Benutzers umfasst,
b) eine Lizenz berechnet (140), die wenigstens eine Zugangsdateneinheit umfasst, welche das Endgerät benötigt, um auf den Inhalt zuzugreifen, wobei diese Zugangsdateneinheit von der Kennung des Multimedia-Inhalts und von der Kennung des Endgeräts oder des Benutzers abhängt,
c) in Reaktion auf die Anforderung die in Schritt b) berechnete Lizenz sendet (150);
**dadurch gekennzeichnet, dass**
- das Verfahren vor Schritt a) einen Schritt e) (120) umfasst, welcher enthält:
• die Gewinnung (122) einer ersten Empfehlungsliste für diesen Benutzer, wobei diese erste Liste eine begrenzte Anzahl von Kennungen von Multimedia-Inhalten aus einer größeren Gesamtheit von Multimedia-Inhalten, die in dem System verfügbar sind, enthält, wobei die durch diese erste Liste identifizierten Multimedia-Inhalte eine größere Wahrscheinlichkeit aufweisen, dass durch das Endgerät des Benutzers auf sie zugegriffen wird, als die anderen Multimedia-Inhalte der größeren Gesamtheit, wobei diese erste Liste in Abhängigkeit von der Kennung des Benutzers und von einer Datenbank vorerfasster Daten, aus denen es möglich ist, eine Wahrscheinlichkeit zu berechnen, dass auf irgendeinen in dem System verfügbaren Multimedia-Inhalt durch das Endgerät des Benutzers zugegriffen wird, erstellt wird,
• die automatische Auswahl (124) wenigstens einer Kennung eines Multimedia-Inhalts in dieser ersten Liste, und
• für jede automatisch ausgewählte Kennung die Vorausberechnung (126) wenigstens einer Zugangsdateneinheit unter Verwendung dieser Kennung eines Multimedia-Inhalts und der Kennung des Endgeräts oder des Benutzers,
- in Schritt b) der Server die in Schritt a) empfangene Kennung des Multimedia-Inhalts in den in Schritt e) automatisch ausgewählten Kennungen sucht (141), anschließend im Erfolgsfall die dieser Kennung entsprechende vorausberechnete Zugangsdateneinheit auswählt und im Falle eines Fehlschlags diese Zugangsdateneinheit erzeugt (142).

4. Verfahren nach Anspruch 3, wobei das Verfahren umfasst:
- die Berechnung (141) der Arbeitslast des Servers in Abhängigkeit von der Anzahl der im Verlaufe eines Zeitintervalls durch den Server zu verarbeitenden Anforderungen und von der Dauer dieses Zeitintervalls, und
- die Blockierung oder die Auslösung von Schritt e) in Abhängigkeit von der berechneten Arbeitslast.

5. Verfahren nach einem der Ansprüche 3 bis 4, wobei Schritt e) (120) ausgelöst wird in Reaktion auf den Empfang:
- einer Liste von Kennungen neuer Benutzer des Systems, wobei diese Liste die Kennung des Benutzers umfasst,
- einer Liste von Kennungen neuer Endgeräte des Benutzers,
- einer Liste von Kennungen von Inhalten, auf die durch den Benutzer neu zugegriffen wurde,
- einer Liste von Kennungen von Benutzern, die aus dem System abgemeldet wurden, oder
- einer Liste von Kennungen von Endgeräten, die aus dem System abgemeldet wurden.

6. Informationsaufzeichnungsmedium, **dadurch gekennzeichnet, dass** es Anweisungen zur Ausführung des Schritts e) eines Verfahrens gemäß einem der Ansprüche 3 bis 5, wenn diese Anweisungen von einem elektronischen Rechner ausgeführt werden, umfasst.

7. Lizenzserver, **dadurch gekennzeichnet, dass** dieser Server einen elektronischen Rechner (62) umfasst, der dafür programmiert ist, Schritt e) eines Verfahrens zur Berechnung einer Lienz nach einem der Ansprüche 3 bis 5 auszulösen und auszuführen.

## Claims

1. Method for providing, by way of an electronic licence server, in a system for providing multimedia contents, a licence allowing a terminal of a user of the system to access a multimedia content, this licence being dependent both on an identifier of the multimedia content and on an identifier of the terminal or of the user, the method in which:
a) the server receives (130) a request including the identifier of the multimedia content and the identifier of the terminal or of the user,
b) the server computes (140) a licence including at least one access data needed by the terminal to access the multimedia content, this access data being dependent on the identifier of the multimedia content and on the identifier of the terminal or of the user,
c) the server transmits (150), in response to the request, the licence computed in the step b),
d) the terminal receives (160) the licence computed in the step c), and uses it to access the multimedia content,
**characterized in that**:
- before the step a) the method includes a step e) (120) comprising:
• the obtaining (122) of a first recommendation list for this user, this first list containing a limited number of identifiers of multimedia contents from among a larger set of multimedia contents available in the system, the multimedia contents identified by this first list having a higher probability of being accessed by the terminal of the user than the other multimedia contents of the larger set, this first list being constructed according to the identifier of the user and a database of pre-stored data on the basis of which it is possible to compute a probability that any multimedia content available in the system will be accessed by the terminal of the user,
• the automatic selection (124), from this first list, of at least one multimedia content identifier, and
• for each automatically selected identifier, the pre-computing (126) of at least one access data using this multimedia content identifier and the identifier of the terminal or of the user, and
- in the step b), the server searches (141) for the identifier of the multimedia content received in the step a) from among the identifiers automatically selected in the step e), then, in the event of success, selects the pre-computed access data corresponding to this identifier, and, in the event of failure, generates (142) this access data.

2. Method according to Claim 1, in which the step a) is preceded:
- by the transmission (104), to the terminal or to another terminal of the user, of the first or of a second recommendation list constructed for this user and containing at least one of the identifiers automatically selected in the step e),
- by the display, by the or said other terminal of the user, of this first or second recommendation list, in such a way as to favour the selection by the user of one of the multimedia content identifiers automatically selected in the step e) for its transmission to the licence server in the step a).

3. Method for computing, by way of an electronic licence server, for the implementation of the method according to Claim 1, of a licence allowing a terminal of a user of the system to access a multimedia content, this licence being dependent both on an identifier of the multimedia content and on an identifier of the terminal or of the user, the method in which the server:
a) receives (130) a request including the identifier of the multimedia content and the identifier of the terminal or of the user,
b) computes (140) a licence including at least one access data needed by the terminal to access the multimedia content, this access data being dependent on the identifier of the multimedia content and on the identifier of the terminal or of the user,
c) transmits (150), in response to the request, the licence computed in the step b),
**characterized in that**:
- before the step a) the method includes a step e) (120) comprising:
• the obtaining (122) of a first recommendation list for this user, this first list containing a limited number of identifiers of multimedia contents from among a larger set of multimedia contents available in the system, the multimedia contents identified by this first list having a higher probability of being accessed by the terminal of the user than the other multimedia contents of the larger set, this first list being constructed according to the identifier of the user and a database of pre-stored data on the basis of which it is possible to compute a probability that any multimedia content available in the system will be accessed by the terminal of the user,
• the automatic selection (124), from this first list, of at least one multimedia content identifier, and
• for each automatically selected identifier, the pre-computing (126) of at least one access data using this multimedia content identifier and the identifier of the terminal or of the user,
- in the step b), the server searches (141) for the identifier of the multimedia content received in the step a) from among the identifiers automatically selected in the step e), then, in the event of success, selects the pre-computed access data corresponding to this identifier, and, in the event of failure, generates (142) this access data.

4. Method according to Claim 3, which includes:
- computing (141) the workload of the server as a function of the number of requests to be processed by the server over a time interval, and of the duration of this time interval, and
- the inhibiting or triggering of the step e), depending on the computed workload.

5. Method according to either one of Claims 3 and 4, in which the step e) (120) is triggered in response to receiving:
- a list of identifiers of new users of the system, this list including the identifier of the user,
- a list of identifiers of new terminals of the user,
- a list of identifiers of content newly accessed by the user,
- a list of identifiers of users unsubscribed from the system, or
- a list of identifiers of terminals unsubscribed from the system.

6. Information storage medium, **characterized in that** it includes instructions for executing the step e) of a method in accordance with any one of Claims 3 to 5, when these instructions are executed by an electronic computer.

7. Licence server, **characterized in that** this server includes an electronic computer (62) programmed to trigger and execute the step e) of a method for computing a licence in accordance with any one of Claims 3 to 5.
